(19) **Europäisches Patentamt**
**European Patent Office**
**Office européen des brevets**

(11) **EP 4 694 284 A1**

(12) **EUROPEAN PATENT APPLICATION**
published in accordance with Art. 153(4) EPC

(43) Date of publication:
**11.02.2026 Bulletin 2026/07**

(51) International Patent Classification (IPC):
*H04W 24/02* (2009.01)      *H04B 17/00* (2015.01)
*H04W 92/12* (2009.01)

(21) Application number: **23931975.9**

(52) Cooperative Patent Classification (CPC):
**H04B 17/00; H04W 24/02; H04W 92/12**

(22) Date of filing: **04.04.2023**

(86) International application number:
**PCT/JP2023/013996**

(87) International publication number:
**WO 2024/209563 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
• **OKAMOTO, Seiichiro**
**Tokyo 100-6150 (JP)**
• **TESHIMA, Kunihiko**
**Tokyo 100-6150 (JP)**
• **KAWAI, Kunihiro**
**Tokyo 100-6150 (JP)**
• **TAKAMIYA, Kotaro**
**Tokyo 100-6150 (JP)**

(74) Representative: **Hoffmann Eitle**
**Patent- und Rechtsanwälte PartmbB**
**Arabellastraße 30**
**81925 München (DE)**

(54) **COMMUNICATION DEVICE, MANAGEMENT DEVICE, AND TESTING METHOD**

(57)     A communication apparatus includes: a reception unit configured to receive, from a management apparatus, a notification that indicates test content; and a control unit configured, on the basis of the notification, to transition to a test mode and control a test relating to communication via a radio apparatus.

FIG.9

**Description**

Technical Field

The present invention relates to a communication apparatus, a management apparatus, and a test method in a radio communication system.

[Background Art]

In NR (New Radio) (also referred to as "5G") that is a successor system to LTE (Long Term Evolution), technologies have been introduced to meet requirements such as large system capacity, high-speed data transmission, low latency, simultaneous connectivity for many terminals, low cost, and reduced power consumption.
In addition, as a standard specification of a fronthaul interface in a next-generation radio access network, an O-RAN fronthaul specification has been released. The method of functional separation in a base station differs between the 3GPP (registered trademark) specification and the O-RAN fronthaul specification.

Citation List

Non-Patent Literature

[Non-Patent Literature 1] 3GPP TS 38.104 V17.8.0 (2022-12)
[Non-Patent Literature 2] 3GPP TS 38.141-1 V17.8.0 (2022-12)
[Non-Patent Literature 3] 3GPP TS 38.141-2 V17.8.0 (2022-12)

Summary of the Invention

Solution to Problem

Non-Patent Literatures 1 to 3 and the like specify tests for checking performance of a base station in 3GPP (registered trademark).
However, in the related art, there is no standard specification of a test corresponding to the O-RAN fronthaul specification, and thus there is a problem that a test for the O-RAN fronthaul specification cannot be appropriately performed.
The present invention has been made in view of the above circumstances, and an object of the present invention is to provide a technique that enables a communication apparatus to appropriately perform a test related to communication via a radio apparatus.

Means for Solving the Problem

According to the disclosed technique, there is provided a communication apparatus including:

a reception unit configured to receive, from a management apparatus, a notification that indicates test content; and
a control unit configured, on the basis of the notification, to transition to a test mode and control a test relating to communication via a radio apparatus.

Advantageous Effects of Invention

According to the disclosed technique, a technique is provided that enables a communication apparatus to appropriately perform a test related to communication via a radio apparatus.

Brief Description of the Drawings

[Fig. 1] FIG. 1 is a diagram for explaining a radio communication system according to an embodiment of the present invention;

[Fig. 2] FIG. 2 is a diagram for explaining a radio communication system according to an embodiment of the present invention;

[Fig. 3] FIG. 3 is a diagram showing an example of a configuration including an SMO 13;

[Fig. 4] FIG. 4 shows tests in TS38.104;

[Fig. 5] FIG. 5 is a diagram showing a configuration of a base station 10 conforming to Split Option 7.2x;

[Fig. 6] FIG. 6 is a diagram showing a specific example of "PHY-low & RF" and "PHY-High";

[Fig. 7] FIG. 7 is a diagram illustrating a configuration of a base station 10 conforming to Split Option 2;

[Fig. 8] FIG. 8 is a diagram showing an example of a system configuration in a first embodiment;

[Fig. 9] FIG. 9 is a sequence diagram in the first embodiment;

[Fig. 10] FIG. 10 is a diagram showing an example of a system configuration according to a second embodiment;

[Fig. 11] FIG. 11 is a sequence diagram in the second embodiment;

[Fig. 12] FIG. 12 is a diagram showing an example of the configuration of a management apparatus;

[Fig. 13] FIG. 13 is a diagram showing an example of the configuration of a communication apparatus;

[Fig. 14] FIG. 14 is a diagram showing an example of a hardware configuration of a management apparatus or a communication apparatus according to an embodiment of the present invention; and

[Fig. 15] FIG. 15 is a diagram showing a configuration example of a vehicle.

Description of Embodiments

Hereinafter, embodiments of the present invention will be described with reference to the drawings. The embodiments described below are examples, and embodiments to which the present invention is applied are not limited to the following embodiments.

In the operation of the radio communication system according to the embodiment of the present invention, an existing technique is used as appropriate. The existing technique is, for example, existing LTE or existing NR, but is not limited to existing LTE and NR.

In addition, in the embodiments of the present invention described below, terms used in the existing NR and the like are used, but this is for convenience of description, and signals, functions, and the like similar to these may be referred to by other names.

In the embodiment of the present invention, a duplex scheme may be a time division duplex (TDD) scheme, a frequency division duplex (FDD) scheme, or another scheme (for example, flexible duplex or the like).

In the embodiment of the present invention, a radio parameter or the like being "configured" may mean that a predetermined value is configured in advance (Pre-configuration), or may mean that a radio parameter provided as notification from a base station 10 or a terminal 20 is configured.

(System Configuration Example)

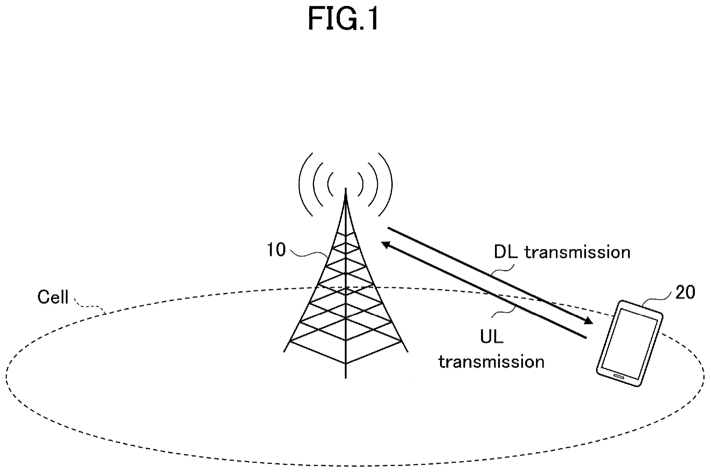

FIG. 1 is a diagram illustrating Configuration Example (1) of a radio communication system according to an embodiment of the present invention. As shown in FIG. 1, the radio communication system includes a base station 10 and a terminal 20. Although a single base station 10 and a single terminal 20 are depicted, this is merely an example, and any number of each may be provided. In this embodiment, the base station 10 specifically includes components such as an O-RU (O-RAN Radio Unit) and an O-DU (O-RAN Distributed Unit).

The base station 10 is a communication apparatus that provides one or more cells and performs radio communication with the terminal 20. The physical resources of the radio signal are defined in the time domain and the frequency domain, and the time domain may be defined by orthogonal frequency division multiplexing (OFDM). The frequency domain may be defined by the number of symbols, or may be defined by the number of subcarriers or the number of resource blocks. The base station 10 transmits a synchronization signal and system information to the terminal 20. The synchronization signal is, for example, an NR-PSS and an NR-SSS. The system information is transmitted, for example, on the NR-PBCH, and is also referred to as broadcast information. The synchronization signal and the system information may be referred to as an SS/PBCH block (SSB). The SSB may be referred to as a synchronization signal or may be referred to as a synchronization signal block. As illustrated in FIG. 1, the base station 10 transmits a control signal or data to the terminal 20 on a downlink (DL), and receives a control signal or data from the terminal 20 on an uplink (UL). Both the base station 10 and the terminal 20 can transmit and receive signals by performing beamforming. In addition, both the base station 10 and the terminal 20 can apply communication by multiple input multiple output (MIMO) to DL or UL. In addition, both the base station 10 and the terminal 20 may perform communication via a secondary cell (SCell) and a primary cell (PCell) by carrier aggregation (CA). Furthermore, the terminal 20 may perform communication via a primary cell of the base station 10 and a primary secondary cell group cell (PSCell:Primary SCG Cell) of another base station 10 by dual connectivity (DC). The base station 10 may be referred to as a gNB.

The terminal 20 is a communication apparatus having a radio communication function, such as a smartphone, a mobile phone, a tablet, a wearable terminal, an IoT terminal, and a communication module for M2M (Machine-to-Machine). As illustrated in FIG. 1, the terminal 20 receives a control signal or data from the base station 10 in the DL and transmits a control signal or data to the base station 10 in the UL, thereby using various communication services provided by the radio communication system. Also, the terminal 20 receives various reference signals transmitted from the base station 10, and measures channel quality based on the reception result of the reference signal.

The terminal 20 can perform carrier aggregation in which a plurality of cells (a plurality of component carriers (CCs)) are aggregated to communicate with the base station 10. In the carrier aggregation, one PCell (Primary cell) and one or more SCells (Secondary cells) are used. Also, a PUCCH-SCell with PUCCH may be used.

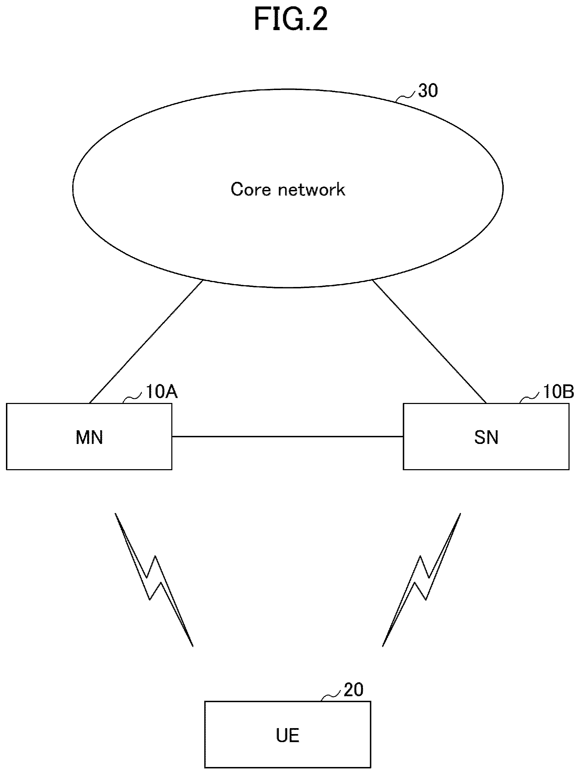

FIG. 2 is a diagram for explaining an example (2) of the radio communication system according to the embodiment of the present invention. FIG. 2 illustrates a configuration example of a radio communication system in a case where dual connectivity (DC) is executed. As shown in FIG. 2, a base station 10A that serves as a master node (MN) and a base station 10B that serves as a secondary node (SN) are provided. The base station 10A and the base station 10B are connected to the core network respectively. The terminal 20 may communicate with both the base station 10A and the base station 10B.

A cell group provided by the base station 10A that is the MN, is referred to as a master cell group (MCG), and a cell group provided by the base station 10B that is the SN is referred to as a secondary cell group (SCG). In DC, the MCG includes one PCell and one or more SCells, and the SCG includes one PSCell (Primary SCG Cell) and one or more SCells.

The processing operation in the present embodiment may be executed by the system configuration shown in FIG. 1, the system configuration shown in FIG. 2, or a system configuration other than these.

(Configuration Example of O-RAN)

For the purpose of opening and promoting intelligence of RAN (Radio Access Network) in the 5G era, the O-RAN Alliance has been established, and many business operators/vendors are affiliated with the O-RAN Alliance and are under discussion. In the present embodiment, it is assumed that the base station 10 has a fronthaul configuration conforming to the O-RAN fronthaul specification. However, the present invention is not limited to this assumption.

The fronthaul configuration is one in which one or more radio units that perform RF (wireless) processing and an aggregation unit that aggregates the radio units are connected by a circuit (which may be either wired or wireless). This circuit may also be referred to as the "fronthaul". In the present embodiment, the radio unit is called an O-RU (O-RAN Radio Unit) and the aggregation unit is called an O-DU (O-RAN Distribution Unit). The O-RU may also be referred to as a radio apparatus, and the O-DU as a communication apparatus.

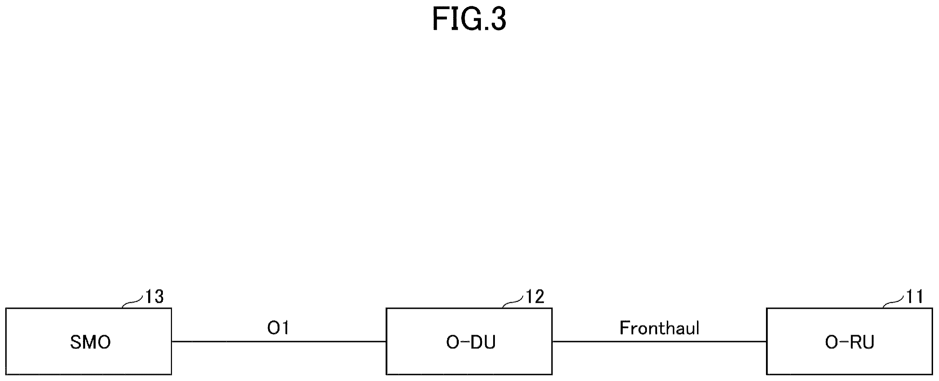

In this embodiment, as illustrated in FIG. 3, the configuration includes an O-RU 11 and an O-DU 12, and it is assumed that an SMO (Service Management and Orchestration) 13 is connected to the O-DU 12 via the O1 interface. The SMO 13 is an apparatus that performs monitoring, maintenance, and orchestration of the RAN (Radio Access Network).

(About 3GPP (Registered TM) Conformance Test in O-RAN)

In the non-patent document 1 (3GPP TS38.104) and the non-patent documents 2 and 3 (TS38, 141), tests for checking the performance of the base station 10 are defined.

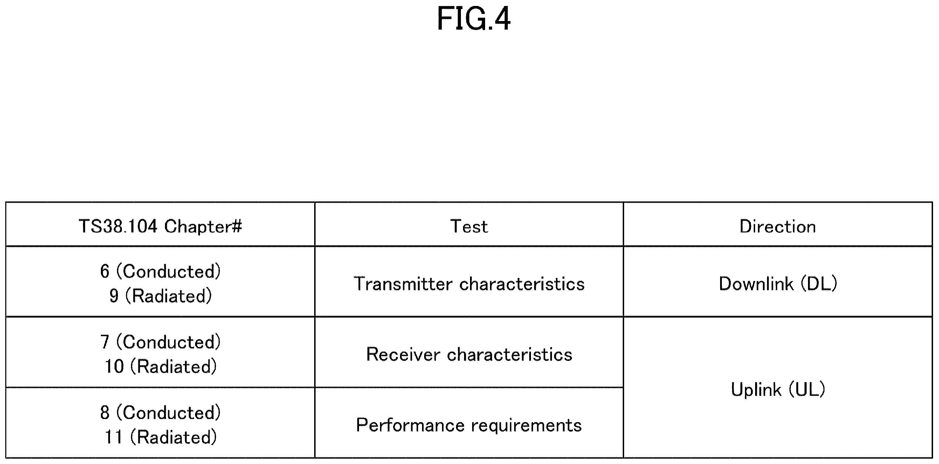

More specifically, TS 38.104 defines three types of tests, as illustrated in FIG. 4. For the detailed test conditions and procedures, refer to TS 38.104, TS 38.141-1 (Conducted), and TS 38.141-2 (Radiated).

As an operator (communication carrier), the base station 10 expects that the minimum performance is guaranteed by passing these tests, and these test rules are used for the technical conformity certification test

In order to perform the test, the apparatus needs to operate in a test mode that is not used in actual operation. However, in the related art, there is no standard technical specification for the activation of the test mode and the execution of the test in the apparatus, and the apparatus is implemented by a vendor.

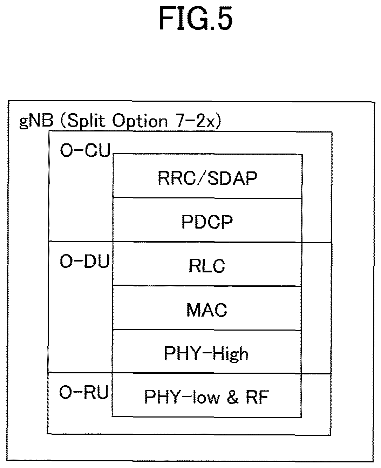

In the base station 10 that adheres to the fronthaul specification envisioned in this embodiment, Functional Split Option 7.2x is employed, as illustrated in FIG. 5, so that the PHY (physical layer) is functionally divided to the O-DU 12 and the O-RU 11.

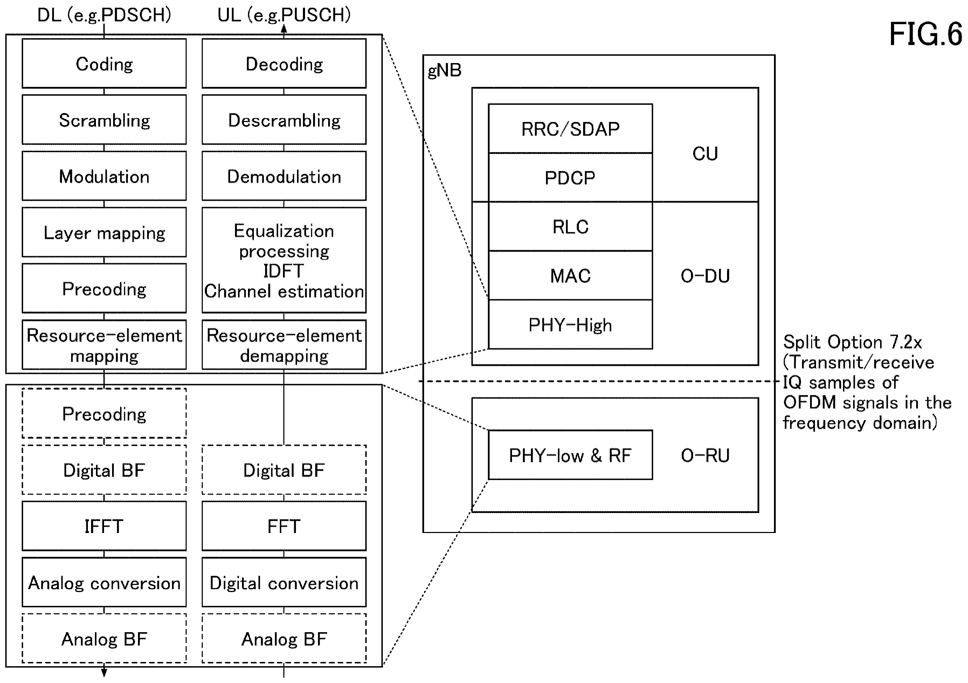

That is, in Functional Split Option 7.2x, the PHY is separated into "PHY-low & RF" on the O-RU 11 side and "PHY-High" on the O-DU 12 side. FIG. 6 shows a specific example of the functions of "PHY-low & RF" and "PHY-High". In FIG. 6, the dashed lines indicate optional features. In addition, when the precoding is performed on the O-RU 11 side, the precoding is not performed on the O-DU 12 side.

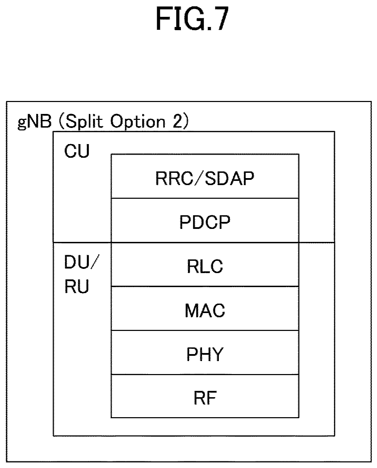

On the other hand, Functional Split in 3GPP (registered trade mark) is only Option 2 illustrated in FIG. 7, and is separated into a CU and a "DU/RU" as illustrated in FIG. 7. That is, the above test defined by 3GPP (registered trade mark) does not assume the configuration in which the O-DU 12 and the O-RU 11 are separated.

(About Problems in Embodiment)

Problem 1: As described above, in the O-RAN, there is no standard technical specification related to activation of the test mode and execution of the test, and thus there is a problem that the operator cannot freely execute the test.

Problem 2: In addition, in the base station 10 in which the O-DU 12 and the O-RU 11 are separated from each other by conforming to the O-RAN, there is a problem that the operation between the O-DU 12 and the O-RU 11 at the time of activating the test mode and executing the test is not defined, and for example, if the O-DU 12 and the O-RU 11 are manufactured by multiple vendors, there is no clear means for performing the test.

(Overview of Embodiment)

An overview of a technique according to an embodiment for solving the above problems 1 and 2 will be described.

For the problem 1, a provision (O1 Interface for O-DU) for instructing activation and execution of the test mode in the base station 10 in which the O-DU 12 and the O-RU 11 are functionally separated in conformity with the O-RAN is newly defined. For the problem 2, a specific means is defined that can evaluate the 3GPP (registered trademark) standard even when the O-DU 12 and the O-RU 11 are manufactured by multiple vendors.

To be more specific, the definition of a new message of O1 Interface for O-DU, which is one of the O-RAN standard technical specifications, and the O-DU operation related to the message, are specified. The outline of the operation of each of the UL test and the DL test based on the definition is as follows.

UL Test:

The O-DU 12 receives a notification of the test mode from the SMO 13, and executes control to report the measurement result to the SMO 13 based on the signal received from the O-RU 11.

In relation to the above reporting, a Performance Management counter (hereinafter, PM counter) is defined, which is information used by the O-DU 12 to report the measurement result to the SMO 13.

DL Test:

The O-DU 12 receives the notification of the test mode from the SMO 13 and executes control to transmit a test model to the O-RU 11. The test model is a signal for performing a test, and may be referred to as a test signal.

Hereinafter, an operation related to a test will be described in detail with an embodiment related to the UL test as a first embodiment and an embodiment related to the DL test as a second embodiment.

(First Embodiment: UL Test)

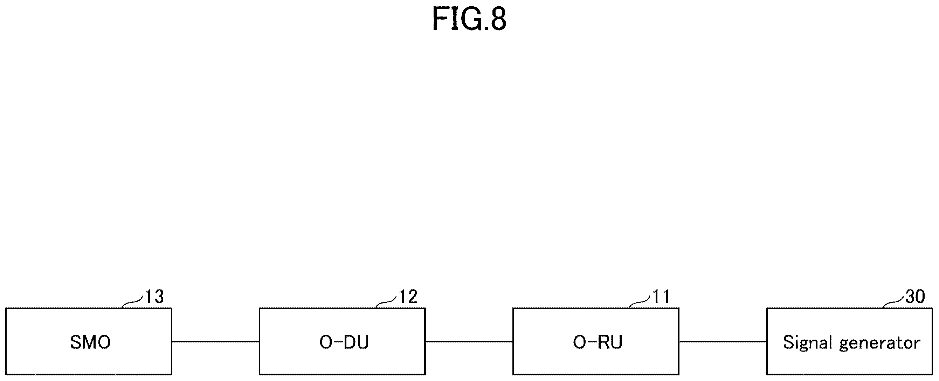

FIG. 8 shows an example of a system configuration according to the first embodiment. As shown in FIG. 8, the system includes a signal generator 30, the O-RU 11, the O-DU 12, and the SMO 13, and at least apparatuses connected by lines in FIG. 8 can communicate with each other. Further, a plurality of O-RUs 11 may be connected to one O-DU 12.

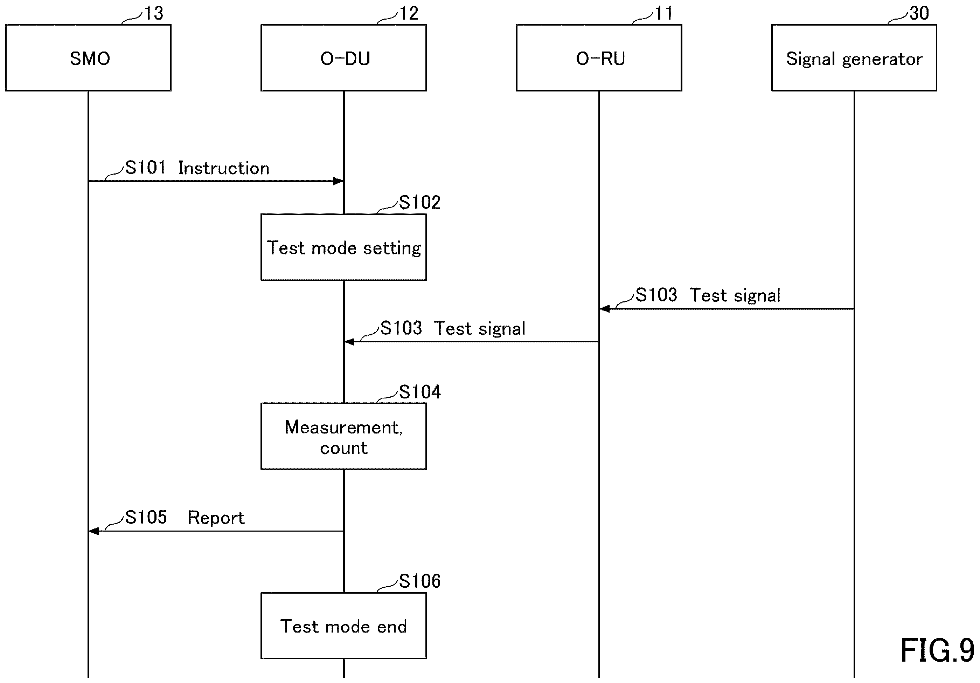

FIG. 9 shows a sequence for a test executed in each test item of UL. An operation example for a test will be described along the procedure shown in FIG. 9. As a premise of the sequence of FIG. 9, it is assumed that a connection of the M plane is established between the SMO 13, the O-DU 12, and the O-RU 11, and synchronization is achieved between the O-DU 12, the O-RU 11, and the signal generator 30.

<S101>

In S101 before start of the test, the SMO 13 transmits an instruction (notification) to the O-DU 12, and the O-DU 12 receives the instruction. By this instruction, the O-DU 12 specifies the content of the test to be performed. An example of the content of the instruction in S101 will be described later.

Note that the SMO 13 may instruct the O-DU 12 to perform a plurality of tests by one instruction. That is, the O-DU 12 may be instructed to perform a plurality of tests by one instruction.

For example, when a plurality of O-DU12 are connected under the O-RU11, the SMO13 may transmit one instruction that summarizes the tests for each of the plurality of the O-RU11 to the O-DU12.

For example, when one O-RU 11 supports a plurality of CCs (component carriers), the SMO 13 may transmit one instruction that aggregates tests for each of the plurality of CCs to the O-DU 12.

<S102>

The O-DU 12 is set to the test mode based on the instruction from the SMO 13. That is, the O-DU 12 transitions to the test mode. The test mode is a mode for performing a test, which is different from the normal operation mode. That is, after S102, the O-DU 12 executes an operation (behavior) in the test mode.

<S103>

In S103, the test signal transmitted from the signal generator 30 reaches the O-DU 12 via the O-RU 11. The O-DU 12 receives a test signal from the O-RU 11. The test signal is, for example, a fixed reference channel (FRC).

<S104>

In S104, the O-DU 12 counts parameters necessary for reporting measurement results to the SMO 13 based on the test signal received in a predetermined measuring period. Examples of parameters that need to be counted in the O-DU 12 in each test are described later.

<S105>

In S105, the O-DU 12 generates a count result as a PM counter and reports the generated count result to the SMO 13. The O-DU 12 may report one count result at a time, or may report a plurality of count results at a time. As a method of reporting the count result to the SMO 13, for example, there are the following methods 1 to 3.

Method 1:

The O-DU 12 reports each count results as a raw value. In this case, the SMO 13 determines whether the test is passed or not based on the count result received from the O-DU 12.

Method 2:

The O-DU 12 calculates a value for determining a requirement from each count result, further determines whether or not the calculated value satisfies the requirement, and reports a determination result (OK or NG) to the SMO 13. A specific example of the requirement will be described later.
In the method 2, since information reported from the O-DU 12 to the SMO 13 is only information of OK/NG, it is possible to reduce the amount of transmission signals between the O-DU 12 and the SMO 13. Further, since the SMO 13 side does not need to have a function of making a determination, the function of the SMO 13 can be simplified.

Method 3:

The O-DU 12 calculates a value for determining the requirement from each count result, and reports the calculated information to the SMO 13. An example of the "value for determining the requirement" will be described later.
In the case of the above-described method 2, although the above-described effect is obtained, information indicating the degree of success/failure is not transmitted to the SMO 13 side, and information that an operator (business operator) operating the SMO 13 can obtain is minimized.
On the other hand, the method 3 is an intermediate solution between the method 1 and the method 2. In method 3, information indicating the degree of success/failure can be transmitted, and the amount of transmission signals can be reduced compared to method 1.

<S106>

In S106, the O-DU 12 ends the test mode after transmitting the PM counter.
Note that the test operation may be performed in accordance with the corresponding test regulations of Non-Patent Documents 1 to 3 (3GPP TS38.104, TS38.141) for points not described in the present specification. In addition, since "7.6 Receiver spurious emissions" of Non-Patent Document 2 does not perform measurement in the O-DU 12, the technique according to the present embodiment need not be applied.

(Detailed Example of Test Item)

Hereinafter, for each test item (the corresponding section in TS38.141-1), specific examples for (A) the content of the instruction from the SMO 13, (B) parameters to count in the O-DU 12, and (C) a report value calculation method and (D) requirements will be described.

(A) The content of the instruction from the SMO 13 corresponds to the instruction provided as notification in S101 of FIG. 9. Note that a YANG parameter may be newly defined so that the O-DU 12 can recognize the instruction content (parameter).

(B) The parameter counted by the O-DU 12 is a parameter used in the raw value report of the method 1 in S105.

(C) The report value calculation method corresponds to the method for calculating the information (a value for determining requirements) of the method 3 in S105.

(D) The requirement corresponds to the result determination method of the method 2 in S105. The following description of (D) is a brief description, and strictly, for example, the description follows the minimum requirements of each test of TS38.104.

Hereinafter, examples of (A) the content of the instruction from the SMO 13, (B) the parameter to count with the O-DU 12, (C) the report value calculation method, and (D) the requirement will be described for each test item. In the following, the section number of TS38.141-1 and the title (test item name) thereof are described as the test items, and the contents of (A) to (C) are described for each of the test items.

<Test Items: 7.2 Reference sensitivity level, 7.3 Dynamic Range, 7.4.1 Adjacent Channel Selectivity, 7.4.2 In-band blocking, 7.5 Out-of-band blocking, 7.7 Receiver intermodulation, 7.8 In-channel selectivity>

(A) The content of the instruction from the SMO 13

    1. Test item
    2. FRC type
    3. Carrier frequency
    4. PRB offset
    5. Beam ID (when the O-RU performs beamforming)

(B) Parameters to count with the O-DU 12

    1. Number of reception occasions (total number of FRC slots x number of slots within the measurement period)
    2. Number of CRC OKs

(C) The report value calculation method Throughput=Number of CRC OKs/Number of reception occasions

(D) Requirement

Throughput is greater than 95%

<Test Items: 8.2.1 Performance requirements for PUSCH with transform precoding disabled, 8.2.2 Performance requirements for PUSCH with transform precoding enabled>

(A) The content of the instruction from the SMO 13

    1. Test item
    2. FRC type
    3. Carrier frequency
    4. PRB offset
    5. PUSCH mapping type (A or B)
    6. Beam ID (when the O-RU performs beamforming)

(B) Parameters to count with the O-DU 12

1. Number of reception occasions (total number of slots during the measurement period in which PUSCH is allocated, including HARQ NACK)
2. Number of CRC OKs

(C) Report value calculation method
Throughput is Number of CRC OKs/Number of reception occasions
(D) Requirement

Throughput is equal to or greater than 70% <Test Item: 8.2.3 Performance requirements for UCI multiplexed on PUSCH>

(A) The content of the instruction from the SMO 13

1. Test item
2. FRC type
3. Carrier frequency
4. PRB offset
5. PUSCH mapping type (A or B)
6. Number of UCI bits (7 bits or 40 bits)
7. Beam ID (when the O-RU performs beamforming)

(B) Parameters to count with the O-DU 12

1. Total number of slots targeted for reception of UCI on PUSCH
2. Number of HARQ NACKs (number of reception NGs)

(C) Report value calculation method BLER=Number of HARQ NACKs (number of reception NGs)/Total number of slots targeted for reception of UCI on PUSCH

(D) Requirements

For BLER of CSI Part 1, it is less than 0.1%
For BLER of CSI Part 2, it is less than 1% <Test Items: 8.2.4 Performance requirements for PUSCH for high speed train, and 8.2.5 Performance requirements for UL timing adjustment>
(A)-(D) Same as for Test Item 8.2.1.

<Test Item: 8.2.6 Performance requirements for PUSCH with 0.001% BLER>

(A) is identical to (A) for Test Item: 8.2.1. (B) and (C) are identical to (B) and (C) for Test Item: 8.2.3.

(D) Requirement

BLER is equal to or less than 0.001%

<Test Item: 8.2.7 Performance requirements for PUSCH repetition Type A>

(A) is identical to (A) for Test Item: 8.2.1. (B) and (C) are identical to (B) and (C) for Test Item: 8.2.3.

(D) Requirements

BLER is equal to or less than 1 % or less.
Here, BLER is defined as follows.
"BLER is defined as residual BLER; i.e. ratio of incorrectly received transport blocks / sent transport blocks, independently of the number of HARQ transmission(s) for each transport block".

<Test Item: 8.2.8 Performance requirements for PUSCH Mapping Type B with non-slot transmission>

(A) through (D) are the same as (A) through (D) in Test Item: 8.2.1. However, for (A), point 5 (PUSCH mapping type) is fixed to Type B.

<Test Item: 8.2.9 Performance requirements for PUSCH msgA for 2-step RA type>

(A) is the same as (A) of the test item: 8.2.1. (B) and (C) are the same as (B) and (C) of the test item: 8.2.3.

(D) Requirements

BLER is equal to or less than 1%.

<Test Item: 8.3.1 Performance requirements for PUCCH format 0>

(A) The content of the instruction from the SMO 13

      1. Test item
      2. Carrier frequency
      3. PRB offset
      4. PUCCH format (test case)
      5. Beam ID (when the O-RU performs beamforming)

(B) Parameters to count with the O-DU 12

      1. Total number of PUCCH reception slots
      2. Number of HARQ ACK receptions (number of reception OKs)

(C) Report value calculation method - ACK detection rate=Number of HARQ ACK receptions (number of reception OKs)/(Number of target PUCCH reception slots x 2) -ACK miss-detection rate=1-(ACK detection rate)

(D) Requirements

-    ACK detection rate (probability that an ACK is correctly detected when a signal is input): greater than 99%
-    ACK miss-detection rate (probability that an ACK is not detected when a signal is input): less than 1%

<Test Item: 8.3.2.1 Performance requirements for PUCCH format 1: NACK to ACK>

(A) is identical to (A) in Test Item: 8.3.1.
(B) Parameters to count with the O-DU 12

      1. Total number of PUCCH reception slots
      2. Number of HARQ ACK receptions (in idle period)
      3. Number of HARQ ACK receptions (in NACK bits)

(C) Report value calculation method -ACK false-detection rate=Number of HARQ ACK receptions (in idle period)/(Number of target PUCCH reception slots x 2) -NACK-to-ACK detection rate=Number of HARQ ACK receptions (in NACK bits)/(Number of target PUCCH reception slots x 2)

(D) Requirements

- ACK false-detection rate (probability of erroneously detecting an ACK when only noise is input): less than 1%
- NACK-to-ACK detection rate (probability of erroneously detecting a NACK as an ACK): less than 0.1%

<Test Item: 8.3.2.2 Performance requirements for PUCCH format 1: ACK missed detection>

(A) is identical to (A) in Test Item: 8.3.1.
(B) Parameters to count with the O-DU 12

1. Total number of PUCCH reception slots
2. Number of HARQ ACK receptions (in idle period)
3. Number of HARQ ACK receptions (in ACK bits)

(C) Report value calculation method -ACK false-detection rate=Number of HARQ ACK receptions (in idle period)/(Number of target PUCCH reception slots x 2) -ACK detection rate=Number of HARQ ACK receptions (in ACK bits)/(Number of target PUCCH reception slots x 2)

(D) Requirements

- ACK false-detection rate (probability of erroneously detecting an ACK when only noise is input): less than 1%
- ACK detection rate (probability of erroneously detecting a NACK as an ACK): greater than 99%

<Test Item: 8.3.3.1 Performance requirements for PUCCH format 2: ACK missed detection>

(A) is identical to (A) in Test Item: 8.3.1, and (B) through (D) are identical to (B) through (D) in Test Item: 8.3.2.2.

<Test Item: 8.3.3.2 Performance requirements for PUCCH format 2: UCI BLER performance requirements>

(A) is identical to (A) in Test Item: 8.3.1.
(B) Parameters to count wit the O-DU 12

1. Total number of PUCCH reception slots
2. Number of CRC NGs in UCI decoding

(C) Report value calculation method UCI block error=Number of CRC NGs in UCI decoding/Total number of PUCCH reception slots

(D) Requirements

UCI block error is less than 1%.

<Test Item: 8.3.4 Performance requirements for PUCCH format 3>

(A) The content of the instruction from the SMO 13

1. Test item
2. Carrier frequency
3. PRB offset
4. PUCCH format (test case)
5. Test 1 or Test 2
6. Beam ID (when the O-RU performs beamforming)

(B) through (D) are identical to (B) through (D) in Test Item: 8.3.3.2.

<Test Item: 8.3.5 Performance requirements for PUCCH format 4>

(A) is identical to (A) in Test Item: 8.3.1. (B) through (D) are identical to (B) through (D) in Test Item: 8.3.3.2.

<Test Item : 8.4.1 PRACH false alarm probability and missed detection>

(A) The content of the instruction from the SMO 13

1. Test item
2. Carrier frequency
3. PRB offset
4. PRACH format (test case)
5. Beam ID (when the O-RU performs beamforming)

(B) Parameters to count with the O-DU 12

1. Pfa

1. Total number of PRACH reception slots
2. Number of slots in which a preamble was detected

2. Pd

1. Total number of PRACH reception slots
2. Number of slots in which a preamble was detected
3. Timing Advance value for each slot where the preamble was detected

(C) Report value calculation method -Pfa=(Number of slots in which a preamble was detected)/(Total number of PRACH reception slots) (only noise is input) -Pd=(Number of slots in which a preamble was detected)/(Total number of PRACH reception slots) (signal is input)

To account for timing errors when evaluating Pd, the Timing Advance value in 2-3 may be considered when calculating the result, or the TA value itself may be reported.

(D) Requirements

-Pfa (probability of detecting a preamble when only noise is input): 0.1% or less

- Pd (probability of correctly detecting a preamble when a signal is input): 99% or higher

(Effects of First Embodiment)

The technique according to the first embodiment enables the UL test to be appropriately performed in the base station 10 (example: FIG. 5) in which functions are separated according to the O-RAN fronthaul specification.

(Second Embodiment: DL Test)

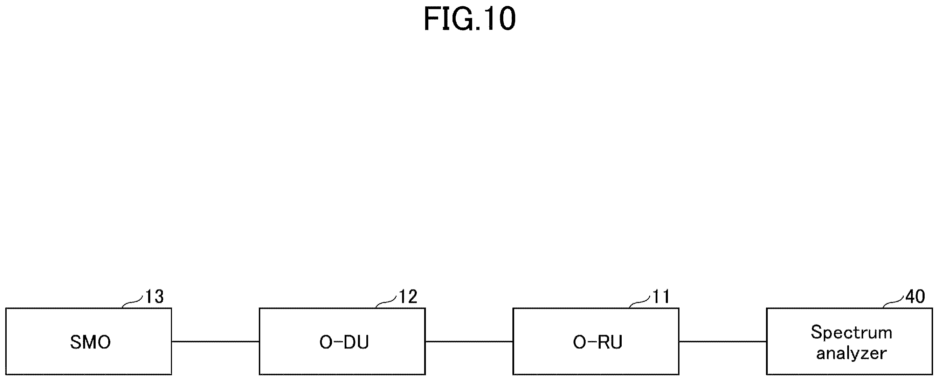

FIG. 10 shows an example of a system configuration according to the second embodiment. As shown in FIG. 10, the present system includes a spectrum analyzer 40, an O-RU 11, an O-DU 12, and an SMO 13, and at least the apparatuses connected by the lines in FIG. 10 can communicate with each other. Further, a plurality of O-DUs 12 may be connected to one O-RU 11. The spectrum analyzer 40 is an example of a test apparatus.

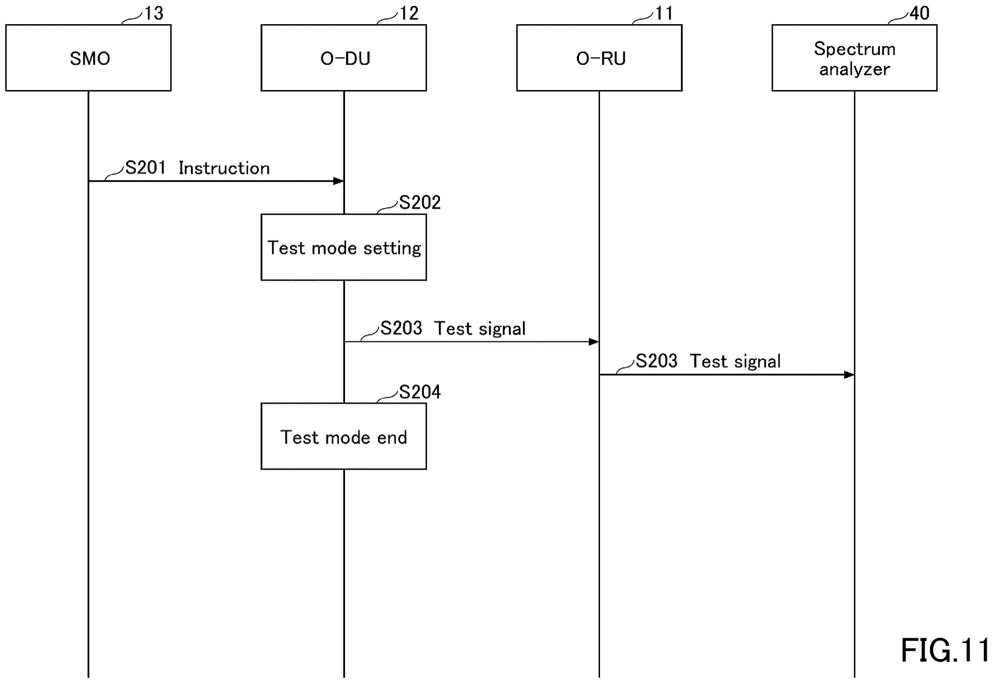

FIG. 11 shows a sequence for a test executed in each test item of DL. An operation example for a test will be described along the procedure illustrated in FIG. 11. As a premise of the sequence of FIG. 11, it is assumed that a connection of the M plane is established between the SMO 13, the O-DU 12, and the O-RU 11.

<S201>

In S201 before start of the test, the SMO 13 transmits an instruction (notification) to the O-DU 12, and the O-DU 12 receives the instruction. By this instruction, the O-DU 12 specifies contents of the test to be performed. An example of the content of the instruction in S201 will be described later.
Note that the SMO 13 may instruct the O-DU 12 to perform a plurality of tests by one instruction. That is, the O-DU 12 may be instructed to perform a plurality of tests by one instruction.
For example, when a plurality of O-RUs 11 are connected under the O-DU 12, the SMO 13 may transmit one instruction that aggregates the tests for each of the plurality of O-RUs 11 to the O-DU 12.
Further, for example, when one O-RU 11 supports a plurality of CCs, the SMO 13 may transmit one instruction that aggregates tests for the plurality of CCs to the O-DU 12.

<S202>

The O-DU 12 is set to the test mode based on the instruction from the SMO 13. That is, the O-DU 12 is shifted to the test mode. The test mode is a mode for performing a test, which is different from the normal operation mode. That is, after S202, the O-DU 12 executes the operation (behavior) in the test mode.

<S203>

In S203, the O-DU 12 generates a test signal (which may be referred to as a test model) based on the instruction received from the SMO 13 and transmits the test signal to the O-RU 11. The test signal reaches the spectrum analyzer 40 via the O-RU 11, and the spectrum analyzer 40 checks whether the test is passed or not.

<S204>

In S204, the O-DU 12 ends the test mode.
Note that the test operation may be performed in accordance with the corresponding test regulations of Non-Patent Documents 1 to 3 (3GPP TS38.104, TS38.141) for points not described in the present specification.

(Detailed Example of Test Item)

Below, specific examples of the content of the instruction from the SMO 13 are explained for each test item (the corresponding sections in TS 38.14-1). Note that items (B) Parameters to count with the O-DU 12, (C) Report value calculation method, and (D) Requirements are omitted, because in the DL test there are no test items that require measurements with the O-DU 12.
(A) The content of the instruction from the SMO 13 corresponds to the instruction provided as notification in S201 in FIG. 11. Note that a YANG parameter may be newly defined so that the O-DU 12 can recognize the instruction content (parameter).

In the case of the DL test, "(A) the content of the instruction from the SMO 13" is common to the following test items.

<Test item: 6.2 Base Station Output Power, 6.3.2 RE power control dynamic range, 6.3.3 Total power dynamic range, 6.4.1 Transmitter OFF power, 6.4.2 Transmitter transient period, 6.5.1 Frequency Error, 6.5.2 Modulation quality, 6.5.3 Time alignment error, 6.6.2 Occupied bandwidth, 6.6.3 Adjacent channel leakage power ratio, 6.6.4 Operating band unwanted emissions, 6.6.5 Transmitter spurious emissions, and 6.7 Transmitter intermodulation>

(A) the content of the instruction from the SMO 13

1. Test Item
2. Cell ID
3. Carrier frequency
4. Test model type
5. Transmission Bandwidth [RB] and SCS
6. Antenna port that outputs signals (basically, signals are output from all antenna ports, and unnecessary ports are terminated)
7. Beam ID (when O-RU performs beamforming)

(Effects of Second Embodiment)

With the technology according to the second embodiment, it is possible to appropriately perform the DL test in the base station 10 (example: FIG. 5) in which the functions are separated according to the O-RAN fronthaul specification.

(Variations)

As to which of Methods 1-3 for reporting the test results in the UL test of the first embodiment is to be used, a particular method may be predetermined for each test item, or the SMO 13 may instruct the O-DU 13 to use a method in S101 in FIG. 9.

Additionally, in any of Methods 1-3, the O-DU 12 may store the generated information without transmitting it to the SMO 13. In that case, for example, a remote apparatus (it may be the SMO 13 or an apparatus other than the SMO 13) may, when necessary, access the O-DU 12 and read out the stored information.

Also, in the DL test of the second embodiment, the information (information indicating the test content) provided as notification from the SMO 13 to the O-DU 12 in S201 of FIG. 11 may be provided from the SMO 13 or the O-RU 11 to an apparatus (for example, the spectrum analyzer 40) that receives a signal from the O-DU 12 and performs a test.

(Apparatus Configuration)

Next, an example of the functional configuration of the SMO 13 and the O-DU 12 that execute the operations described above will be described. The SMO 13 may be referred to as a management apparatus, and the O-DU 12 may be referred to as a communication apparatus.

<SMO 13>

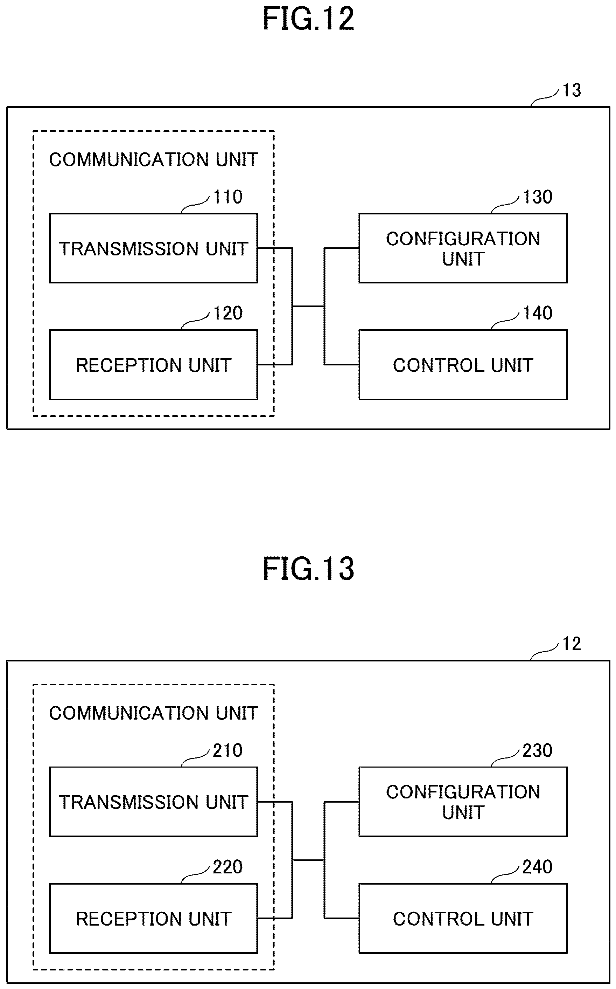

FIG. 12 is a diagram illustrating an example of a functional configuration of the SMO 13. As illustrated in FIG. 12, the SMO 13 includes a transmission unit 110, a reception unit 120, a configuration unit 130, and a control unit 140. The functional configuration illustrated in FIG. 12 is merely an example. The functional division and the name of the functional unit may be any division and name as long as the operation according to the embodiment of the present invention can be executed. The transmission unit 110 and the reception unit 120 may be collectively referred to as a communication unit.

The transmission unit 110 includes a function to transmit a signal (information) to the O-DU 12. The reception unit 120 receives a signal transmitted from the O-DU 12.

The configuration unit 130 stores configuration information in a storage device included in the configuration unit 130, reads the configuration information from the storage device as necessary, and uses the configuration information to generate an instruction (notification) to be transmitted to the O-DU 12, for example. The control unit 140 executes control related to the processing of the SMO 13. The transmission unit 110 may be referred to as a transmitter, and the reception unit 120 may be referred to as a receiver.

<O-DU 12>

FIG. 13 is a diagram illustrating an example of a functional configuration of the O-DU 12. As shown in FIG. 13, the O-DU 12 includes a transmission unit 210, a reception unit 220, a configuration unit 230, and a control unit 240. The functional configuration illustrated in FIG. 13 is merely an example. The functional division and the name of the functional unit may be any division and name as long as the operation according to the embodiment of the present invention can be executed. The transmission unit 210 and the reception unit 220 may be collectively referred to as a communication unit.
The transmission unit 210 performs transmission to the O-RU 11 and transmission to the SMO 13. The reception unit 220 performs reception from the SMO 13 and reception from the O-RU 11.
The configuration unit 230 stores the configuration information in a storage device included in the configuration unit 230, and reads the configuration information from the storage device as necessary. The configuration unit 230 also stores configuration information that is configured in advance. The control unit 240 controls the O-DU 12.
The present specification discloses at least the following supplementary notes.

<Supplementary Notes>

[Clause 1]

A communication apparatus including:

a reception unit configured to receive, from a management apparatus, a notification that indicates test content; and
a control unit configured, on the basis of the notification, to transition to a test mode and control a test relating to communication via a radio apparatus.

[Clause 2]

The communication apparatus as described in Clause 1,

wherein, in an uplink test, the control unit counts a parameter corresponding to the test content on the basis of a test signal received from the radio apparatus, and generates, as test result information,
information representing a count result;
information indicating whether a requirement is satisfied, the information being determined on the basis of the count result; or
information for determining the requirement.

[Clause 3]

The communication apparatus as described in Clause 2, further comprising a transmission unit configured to report to the management apparatus the test result information generated by the control unit.

[Clause 4]

The communication apparatus as described in Clause 1, further comprising a transmission unit configured, in a downlink test, to transmit to the radio apparatus a test signal generated by the control unit on the basis of the test content.

[Clause 5]

A management apparatus including:

a transmission unit configured to transmit, to a communication apparatus, a notification that indicates test content; and
a reception unit configured to receive test result information from the communication apparatus which has transitioned to a test mode on the basis of the notification and performs a test relating to communication via a radio apparatus.

[Clause 6]

A test method executed by a communication apparatus, the test method including:

receiving, from a management apparatus, a notification that indicates test content; and

transitioning to a test mode on the basis of the notification and controlling a test relating to communication via a radio apparatus.

According to any of the Clauses 1 to 6, a technique that enables a communication apparatus to appropriately perform a test related to communication via a radio apparatus is provided. According to Clause 2, various types of information can be generated as the test result information on the uplink test. According to Clause 3, the test result information can be reported to the management apparatus. According to Clause 4, it is possible to appropriately perform a downlink test.

(Hardware Configuration)

The block diagrams (FIGs. 12 and 13) used in the description of the embodiment described above illustrate the block of functional units. Such functional blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

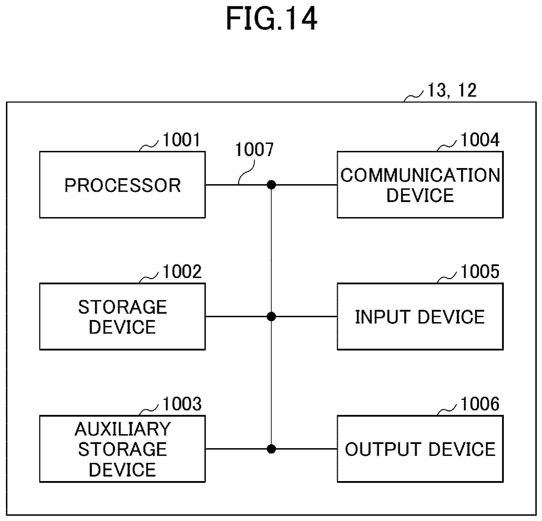

For example, the SM 13, the O-DU 12 and the like in one embodiment of this disclosure may function as a computer for performing the processing of a radio communication method of this disclosure. FIG. 14 is a diagram illustrating an example of a hardware configuration of the SMO 13 and the O-DU 12 according to one embodiment of this disclosure. The SMO 13 and the O-DU 12 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the SMO 13 and the O-DU 12 may be configured to include one or a plurality of apparatuses illustrated in the drawings, or may be configured not to include a part of the apparatuses.

Each function of the SMO 13 and the O-DU 12 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. The control unit 140 shown in FIG. 12 may be attained by a control program that is stored in the storage device 1002 and is operated by the processor 1001. Also, for example, the control unit 240 shown in FIG. 13 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wire network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the SMO 13 and the O-DU 12 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

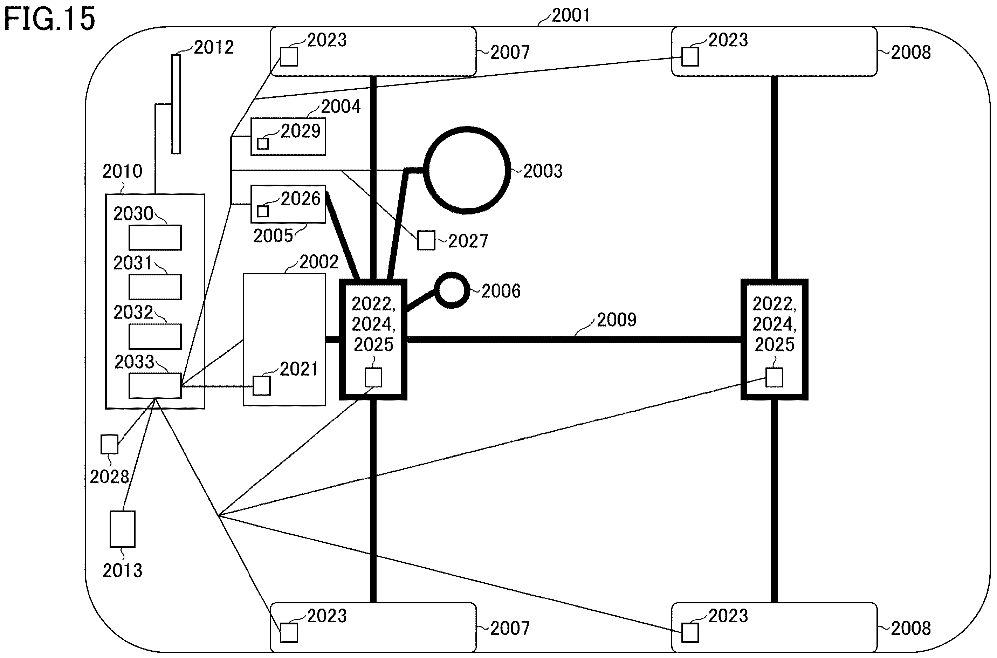

The SMO 13 or the O-DU 12 may be provided in a vehicle. FIG. 15 shows a configuration example of a vehicle 2001 according to the present embodiment. As shown in FIG. 15, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. The SMO 13 or the O-DU 12 in each aspect/embodiment described in the present disclosure may be applied to a communication apparatus mounted on the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, or the like) that receives an input from the outside, and may include an output device (for example, a display, a speaker, an LED lamp, a touch panel, or the like) that performs an output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on input from the outside (user) obtained via the information service unit 2012 to an external device via radio communication. The electronic control unit 2010, the various sensors 2021 to 2028, the information service unit 2012, and the like may be referred to as an input unit that receives an input. For example, PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to a device such as a display or a speaker based on PDSCH (or data/information decoded from the PDSCH) received by the communication module 2013). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

(Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the SMO 13 and the O-DU 12 have been described by using a functional block diagram, but such an apparatus may be attained by hardware, software, or a combination thereof. Each of software that is operated by a processor of the SMO 13 according to the embodiment of the invention and software that is operated by a processor of the O-DU 12 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiment described in this disclosure may be applied to a system using long term evolution (LTE), LTE-advanced (LTE-A), SUPER 3G, IMT-advanced, a 4th generation mobile communication system (4G), a 5th generation mobile communication system (5G), a 6th generation mobile communication system (6G), an xth generation mobile communication system (xG) (x is an integer or a decimal for example), future radio access (FRA), new radio (NR), New radio access (NX), Future generation radio access (FX), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded, modified, created, or defined on the basis thereof. In addition, a combination of a plurality of systems (for example, a combination of 5G and at least one of LTE and LTE-A, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 or the SMO 13 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), and at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In the present disclosure, the transmission of information from the base station to the terminal may be read as the base station instructing the terminal to perform control and operation based on the information.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the SMO 13 and the O-DU 12 may be referred to as a transmission device, a reception device, a communication device, or the like. At least one of the base station and the mobile station may be a device mounted on a mobile object, the mobile object itself, or the like. The mobile object is a movable object, and the moving speed is arbitrary. The moving object may be stopped. Examples of the moving object include, but are not limited to, vehicles, transportation vehicles, automobiles, motorcycles, bicycles, connected cars, excavators, bulldozers, wheel loaders, dump trucks, forklifts, trains, buses, rear cars, rickshaws, ships and other watercraft, airplanes, rockets, artificial satellites, drones, multi-copters, quadcopters, balloons, and objects mounted thereon. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the terminal. For example, each aspect/embodiment of this disclosure may be applied to a configuration in which communication between the base station and the user terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" may include deeming receiving (for example, receiving information), transmitting (for example, transmitting information), input, output, and accessing (for example, accessing data in a memory), as "determining". In addition, "determining" may include deeming resolving, selecting, choosing, establishing, comparing, and the like as "determining". That is, "determining" may include deeming an operation as "determining". In addition, "determining" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first", "second", and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or that the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe. Also, one slot may be referred to as a unit time. The unit time may differ for each cell according to the numerology.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI units, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined based on the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a sub-carrier group (SCG), a resource element group (REG), a PRB pair, an RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In UE, one or a plurality of BWPs may be configured within one carrier.

At least one of the configured BWPs may be active, and it need not be assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as "a", "an", and "the" are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

Description of Symbols

| | |
|---|---|
| 10 | base station |
| 11 | O-RU |
| 12 | O-DU |
| 13 | SMO |
| 20 | terminal |
| 30 | signal generator |
| 40 | spectrum analyzer |
| 110 | transmission unit |
| 120 | reception unit |
| 130 | configuration unit |
| 140 | control unit |
| 210 | transmission unit |
| 220 | reception unit |
| 230 | configuration unit |
| 240 | control unit |
| 1001 | processor |
| 1002 | storage device |
| 1003 | auxiliary storage device |
| 1004 | communication device |
| 1005 | input device |
| 1006 | output device |

| | |
|---|---|
| 2001 | vehicle |
| 2002 | drive unit |
| 2003 | steering unit |
| 2004 | accelerator pedal |
| 2005 | brake pedal |
| 2006 | shift lever |
| 2007 | front wheels |
| 2008 | rear wheels |
| 2009 | axle |
| 2010 | electronic control unit |
| 2012 | information service unit |
| 2013 | communication module |
| 2021 | current sensor |
| 2022 | revolution sensor |
| 2023 | pneumatic sensor |
| 2024 | vehicle speed sensor |
| 2025 | acceleration sensor |
| 2026 | brake pedal sensor |
| 2027 | shift lever sensor |
| 2028 | object detection sensor |
| 2029 | accelerator pedal sensor |
| 2030 | driving support system unit |
| 2031 | microprocessor |
| 2032 | memory (ROM, RAM) |
| 2033 | communication port (IO port) |

**Claims**

1. A communication apparatus comprising:

    a reception unit configured to receive, from a management apparatus, a notification that indicates test content; and
    a control unit configured to, on the basis of the notification, transition to a test mode and control a test relating to communication via a radio apparatus.

2. The communication apparatus as claimed in claim 1,
   wherein, in an uplink test, the control unit counts a parameter corresponding to the test content on the basis of a test signal received from the radio apparatus, and generates, as test result information:

    information representing a count result;
    information indicating whether a requirement is satisfied, the information being determined on the basis of the count result; or
    information for determining the requirement.

3. The communication apparatus as claimed in claim 2, further comprising a transmission unit configured to report, to the management apparatus, the test result information generated by the control unit.

4. The communication apparatus as claimed in claim 1, further comprising a transmission unit configured to, in a downlink test, transmit to the radio apparatus a test signal generated by the control unit on the basis of the test content.

5. A management apparatus comprising:

    a transmission unit configured to transmit, to a communication apparatus, a notification that indicates test content; and
    a reception unit configured to receive test result information from the communication apparatus that has transitioned to a test mode on the basis of the notification and that performs a test relating to communication via a radio apparatus.

**6.** A test method executed by a communication apparatus, the test method comprising:

receiving, from a management apparatus, a notification that indicates test content; and
transitioning to a test mode on the basis of the notification and controlling a test relating to communication via a radio apparatus.

# FIG.1

EP 4 694 284 A1

# FIG.2

EP 4 694 284 A1

# FIG.3

# FIG.4

| TS38.104 Chapter# | Test | Direction |
|---|---|---|
| 6 (Conducted)<br>9 (Radiated) | Transmitter characteristics | Downlink (DL) |
| 7 (Conducted)<br>10 (Radiated) | Receiver characteristics | Uplink (UL) |
| 8 (Conducted)<br>11 (Radiated) | Performance requirements | |

EP 4 694 284 A1

# FIG.5

| gNB (Split Option 7-2x) | |
|---|---|
| O-CU | RRC/SDAP |
| | PDCP |
| O-DU | RLC |
| | MAC |
| | PHY-High |
| O-RU | PHY-low & RF |

FIG.6

DL (e.g.PDSCH)

| Coding |
| Scrambling |
| Modulation |
| Layer mapping |
| Precoding |
| Resource-element mapping |

| Precoding |
| Digital BF |
| IFFT |
| Analog conversion |
| Analog BF |

UL (e.g.PUSCH)

| Decoding |
| Descrambling |
| Demodulation |
| Equalization processing IDFT Channel estimation |
| Resource-element demapping |

| Digital BF |
| FFT |
| Digital conversion |
| Analog BF |

gNB

| RRC/SDAP | CU |
| PDCP | |
| RLC | O-DU |
| MAC | |
| PHY-High | |

| PHY-low & RF | O-RU |

Split Option 7.2x (Transmit/receive IQ samples of OFDM signals in the frequency domain)

EP 4 694 284 A1

29

# FIG.7

gNB (Split Option 2)

| CU | | |
|---|---|---|
| | RRC/SDAP | |
| | PDCP | |
| DU/ RU | RLC | |
| | MAC | |
| | PHY | |
| | RF | |

EP 4 694 284 A1

# FIG.8

| SMO | | O-DU | | O-RU | | Signal generator |
|-----|---|------|---|------|---|------------------|
| 13 | | 12 | | 11 | | 30 |

FIG.9

FIG.10

EP 4 694 284 A1

33

| SMO | | O-DU | | O-RU | | Spectrum analyzer |

~13  ~12  ~11  ~40

FIG.11

EP 4 694 284 A1

# FIG.12

# FIG.13

# FIG.14

~13, 12

~1001
PROCESSOR

1007

~1004
COMMUNICATION DEVICE

~1002
STORAGE DEVICE

~1005
INPUT DEVICE

~1003
AUXILIARY STORAGE DEVICE

~1006
OUTPUT DEVICE

FIG.15

## INTERNATIONAL SEARCH REPORT

| International application No. |
| --- |
| **PCT/JP2023/013996** |

| A. | CLASSIFICATION OF SUBJECT MATTER |
| --- | --- |

*H04W 24/02*(2009.01)i; *H04B 17/00*(2015.01)i; *H04W 92/12*(2009.01)i
FI:   H04W24/02; H04W92/12; H04B17/00 Z

According to International Patent Classification (IPC) or to both national classification and IPC

| B. | FIELDS SEARCHED |
| --- | --- |

Minimum documentation searched (classification system followed by classification symbols)

   H04W24/02; H04B17/00; H04W92/12

Documentation searched other than minimum documentation to the extent that such documents are included in the fields searched

   Published examined utility model applications of Japan 1922-1996
   Published unexamined utility model applications of Japan 1971-2023
   Registered utility model specifications of Japan 1996-2023
   Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2023-15695 A (FUJITSU LIMITED) 01 February 2023 (2023-02-01) | 1, 4-6 |
|  | abstract, claims 1, 4, paragraphs [0030]-[0050], fig. 2, 3 |  |
| Y |  | 2, 3 |
| Y | JP 2005-151189 A (HITACHI COMMUNICATION TECHNOLOGIES LTD.) 09 June 2005 (2005-06-09) | 2, 3 |
|  | abstract, claims 1, 4, paragraphs [0076]-[0097], fig. 8-10 |  |

☐ Further documents are listed in the continuation of Box C.      ☑ See patent family annex.

| | |
| --- | --- |
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **25 October 2023** | **07 November 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| | International application No. |
|---|---|
| | **PCT/JP2023/013996** |

| Patent document<br>cited in search report | Publication date<br>(day/month/year) | Patent family member(s) | Publication date<br>(day/month/year) |
|---|---|---|---|
| JP 2023-15695 A | 01 February 2023 | US 2023/0028175 A1<br>abstract, claims 1, 4,<br> paragraphs [0035]-[0055], fig.<br>2, 3<br>EP 4124120 A1 | |
| JP 2005-151189 A | 09 June 2005 | US 2005/0107080 A1<br>abstract, claims 1, 4,<br> paragraphs [0111]-[0133], fig.<br>8-10<br>CN 1619990 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 38.104*, December 2022
- *3GPP TS 38.141-1*, December 2022
- *3GPP TS 38.141-2*, December 2022